# EUROPEAN PATENT APPLICATION

(11) **EP 4 550 177 A1**
(43) Date of publication of application: **07.05.2025**
(21) Application number: 23207547.3
(22) Date of filing: 02.11.2023
(51) Int. Cl.: G06F 16/903, G06F 16/953

(54) **IMPROVED QUERYING**

(71) Applicant: Trensition, 9000 Gent (BE)
(72) Inventor: Vanderroost, Mike, 9000 Gent (BE)
(74) Representative: Patentales BV

(57) **Abstract**

The invention provides, amongst other aspects, a computer-implemented method for detecting physical entities, the method comprising the steps of: receiving a query request comprising a technical feature; returning a query result comprising a first physical entity selected over the second physical entity based on the respective similarity scores of the first and second physical entities, preferably further comprising the respective similarity scores of the first and second physical entities, wherein the first physical entity is selected over the second physical entity based further on and respective predetermined characteristic scores of the first and second physical entities, wherein the respective characteristic scores of the physical entities are determined based on predetermined numerical vectors of physical entity data within the respective of the physical entities, wherein preferably the query result further comprises the respective predetermined characteristic scores of the first and second physical entities.

## Description

### Field of the invention

The present invention relates to the technical domain of querying of physical entities, particularly to a query result comprising a first physical entity selected over a second physical entity based on characteristic scores thereof which are based on numerical vectors of physical entity data, such as images, present within the physical entities.

### Background art

In recent times, the significance of automated document and data processing has surged dramatically, largely driven by the exponential growth in the volume of these resources. This abundance of data and documents has created an increased demand for automated quality assessment and processing, particularly within industrial sectors. However, this surge has also brought about a concerning increase in spamming sources, which inundate systems with irrelevant or misleading data, posing a significant challenge to automated processing algorithms.

Furthermore, as the quantity of available data continues to expand, some sources may not align with a user's query, necessitating more advanced filtering and relevancy assessment methods to ensure that users receive pertinent and accurate information. In this context, natural language processing emerges as a pivotal component, playing a vital role in ensuring the reliability and efficiency of these automated processes.

US10169706 B2 and US11687796 B2 disclose related methods but are not well adapted to the requirements of queries or of detecting characteristic scores of physical entity sources.

These challenges highlight the need for improved methods that can overcome these limitations.

The present invention aims at addressing issues, such as the issues mentioned above.

### Summary of the invention

According to a first aspect, the present invention provides a computer-implemented method for detecting physical entities, the method comprising the steps of:
- receiving a query request comprising a technical feature;
- determining respective similarity scores of a plurality of physical entities with respect to the query request;
- returning a query result comprising a first physical entity and a second physical entity from among the plurality of physical entities, wherein the first physical entity is selected over the second physical entity based on the respective similarity scores of the first and second physical entities, preferably further comprising the respective similarity scores of the first and second physical entities,

wherein the first physical entity is selected over the second physical entity based further on respective predetermined characteristic scores of the first and second physical entities,
wherein the characteristic scores of the respective physical entities are determined based on predetermined numerical vectors of physical entity data within the respective physical entities,
preferably, wherein the query result further comprises the respective predetermined characteristic scores of the first and second physical entities.

Herein, the detecting may relate to "singling out" of those physical entities that best match a technical feature in a query request that is to be detected. This is particularly done based on similarity scores in combination with characteristic scores of the physical entities. Thereby, in embodiments, the relevant characteristic may be a quality metric, such as an intrinsic quality metric and/or an extrinsic quality metric.

The method of the invention may advantageously provide detection of the "relevant" or "representative" physical entities, which "illustrate best" what matches the technical feature sought for in a query request as well as the relevant characteristic. Thereby, in embodiments, the query result comprises a selection of a first physical entity above a second physical entity. The selection is equivalent to a ranking in a sequence or a short-listing. Thereby, in embodiments, the first physical entity is ranked over the second physical entity. Thereby, in embodiments, the relative ranking of physical entities, e.g., according to descending characteristic scores, may be a further advantage in that the most "relevant" example may appear first. Thus, the method ensures not only that the query result comprises "relevant" physical entities, but also physical entities which score highly on particular relevant characteristic(s), such as quality of text and/or quality of an image and/or quality of a video and/or quality of audio.

Moreover, the characteristic scores of the physical entities may be more efficiently determined based on predetermined numerical vectors of any one or combination of the physical entity data within the respective of the physical entities. Another advantage may lie in the modular nature of this principle, wherein the first physical entity and the second physical entity may be, in their turn, compared as a whole.

In particularly advantageous embodiments, the first physical entity is selected over the second physical entity based further on respective characteristic scores of respective physical entity sources in which the respective of the first and second physical entities is comprised. Preferably, the respective characteristic scores of the physical entity sources are determined based on the respective predetermined characteristic scores of any of the physical entities, preferably of a plurality of the physical entities within the respective physical entity sources.

Such embodiments may advantageously combine scoring of the physical entity and of the physical entity source. This allows for a more robust and synergetic solution which takes into consideration multiple scores for a given physical entity and may effectively link the ranking of the physical entities to any combination of the scores. Thus, the method ensures not only that the query result comprises "relevant" physical entities, but also physical entities and their respective physical entity sources which score highly on particular characteristics, such as quality of publications, resolution of media, non-spamming source, etc.

In embodiments, the characteristic scores of the physical entity sources are determined based on any one or combination of predetermined numerical vectors of the respective physical entity data, preferably a plurality of the respective of the physical entities present within the respective physical entity sources. Thus, the computational burden for the calculation of the characteristic scores of the physical entity sources is lowered, since there is no need to compute the numerical vectors of the physical entity data of the respective physical entities within the respective sources, but rather can be derived from "re-use" of the numerical vectors that are available. In preferred embodiments, the characteristic scores of the physical entity sources are based directly on the respective of the characteristic scores of the physical entities present within the respective physical entity sources, whereby the calculation of the characteristic scores of the physical entity sources is a mere arithmetic calculation, such as a statistic, e.g., through calculation of mean values of the characteristic scores of the physical entities present within the respective physical entity sources. In such embodiments, a lower or higher characteristic score for given physical entity may be directly linked to lower or higher characteristic scores for the physical entity sources in which it is present. Another advantage may lie in the modular nature of this principle, wherein the first physical entity source and the second physical entity source may be, in their turn, compared as a whole.

According to a second aspect, the present invention provides a data processing device comprising means for carrying out the method according to the invention. The device may comprise a processor and a memory comprising instructions which, when executed by said processor, cause the device to execute the method according to the invention.

According to a third aspect, the present invention provides a system comprising:
the data processing device according to invention;
a database connected to the data processing device; and
a user device comprising a display and being connected to the data processing device;
wherein the data processing device is configured to perform the steps of:
   - receiving, from the user device, the query request,
   - detecting, from the database, the physical entities based on the query request,
   - sending, to the user device, the query result,
wherein the user device is configured to:
   - sending, to the data processing device, the query request,
   - receiving, from the data processing device, the query result,
   - displaying the query result on the display.

Such a system may advantageously provide a user with a remote means, e.g., a cloud service, for detection of physical entities according to the user's query request.

According to a fourth aspect, the present invention provides a computer program comprising instructions which, when the program is executed by a computer, cause the computer to carry out the method according to the invention. The computer program product may comprise at least one readable medium in which computer-readable program code portions are saved, which program code portions comprise instructions for carrying out said method.

According to a fifth aspect, the present invention provides a computer-readable medium comprising instructions which, when executed by a computer, cause the computer to carry out the method according to the invention.

Preferred embodiments and their advantages are provided in the description and the dependent claims.

### Brief description of the drawings

The present invention will be discussed in more detail below, with reference to the attached drawings.
Fig. 1 shows a first example method according to the invention.
Fig. 2 shows a second example method according to the invention.

### Description of embodiments

The following descriptions depict only example embodiments and are not considered limiting in scope. Any reference herein to the disclosure is not intended to restrict or limit the disclosure to exact features of any one or more of the exemplary embodiments disclosed in the present specification.

Furthermore, the terms first, second, third and the like in the description and in the claims are used for distinguishing between similar elements and not necessarily for describing a sequential or chronological order. The terms are interchangeable under appropriate circumstances and the embodiments of the invention can operate in other sequences than described or illustrated herein.

Furthermore, the various embodiments, although referred to as "preferred" are to be construed as exemplary manners in which the invention may be implemented rather than as limiting the scope of the invention.

The term "comprising", used in the claims, should not be interpreted as being restricted to the elements or steps listed thereafter; it does not exclude other elements or steps. It needs to be interpreted as specifying the presence of the stated features, integers, steps or components as referred to, but does not preclude the presence or addition of one or more other features, integers, steps or components, or groups thereof. Thus, the scope of the expression "a device comprising A and B" should not be limited to devices consisting only of components A and B, rather with respect to the present invention, the only enumerated components of the device are A and B, and further the claim should be interpreted as including equivalents of those components.

In this document, the term "physical entity data" is an umbrella term for any field directly or indirectly representing and/or comprising data in a physical entity, such as data relating to components of the physical entity. Without being limited thereto, physical entities relate to, e.g., at least one of websites (such as URLs, live streams/feeds, broadcasts, etc.), documents (such as PDFs, Word documents, presentations, text documents, etc.), measurement data (such as time or location data or sensor data relating to, e.g., images or audio or video), and surveillance data (such as, audio, image, video, etc.). The invention relates to determining a characteristic score of a physical entity based on predetermined numerical vectors of physical entity data within the respective of the physical entities. Without being limited thereto, physical entity data may relate to, e.g., any one or any combination of text data and multimedia data, such as text strings, movies, audio data of movies, video data of movies, audio data of audio recordings, text strings extracted from subtitles present in movies, text strings extracted from audio data by means of speech-to-text. Additionally, or alternatively, physical entity data may relate to, e.g., any one or combination of a topic set, a topic, a title, a textual body, a section, a paragraph, a sentence, a semantic triple, a clause, a phrase, a word, an organization, a product, a person, an event, etc. Thus, the physical entity data may relate to data relating to hierarchical components of the physical entity. Thereby, the numerical vectors of the physical entity data may be determined by performing calculations on the physical entity data. Thereby, in embodiments, the numerical vectors are associated with the respective physical entity data.

In this document, the term "characteristic" refers to anything that can be automatically determined from a physical entity, such as overall quality of the physical entity or from any of the physical entity data, such as quality of any or combinations of the physical entity data. Examples thereof include any one or combination of: quality of text (e.g., intrinsic and/or extrinsic quality) and/or quality of image (e.g., any one or combination of: resolution, sharpness, contrast, color accuracy, noise, dynamic range, compression, bit depth, etc.) and/or quality of video (e.g., any one or combination of: resolution, frame rates, bitrate, temporal artifacts and/or resolution, temporal consistency, objective metrics such as signal-to-noise ratio, SNR, etc.) and/or quality of audio (e.g., any one or combination of: frequency response, SNR, distortion, dynamic range, total harmonic distortion, bit depth, sample rate, frequency range, etc.), etc. In embodiments, the respective numerical vectors and/or the respective characteristic scores of the respective physical entities are proportional to the extent that the respective physical entities are of the relevant characteristic. In embodiments, the respective numerical vectors and/or the respective characteristic scores of the respective physical entity data are proportional to the extent that the respective physical entity data are of the relevant characteristic. In embodiments, the characteristic scores of the respective physical entities may jointly contribute to an assessment of the respective physical entity sources, with characteristic scores of the respective physical entity sources associated with all physical entities in their connection within the respective physical entity sources.

In embodiments, the characteristic score of any of the physical entity data (i.e., relating to any component of the physical entity) is based on the numerical vector of said physical entity data, which is calculated based on the hierarchy within said physical entity data. For example, a title of the physical entity comprises the components: a sentence, a phrase, a semantic triple and words. Thus, the numerical vector of the title is calculated based on said components. The characteristic score is thus determined based on the calculated numerical vector of the title. In embodiments, the characteristic score of any of the physical entity data (i.e., any component of the physical entity) is based on the characteristic scores of the components within the hierarchy of said physical entity data.

In embodiments, the characteristic score of the physical entity is based on the numerical vector of said physical entity calculated based on the numerical vector of any physical entity data or component within the physical entity. In embodiments, the characteristic score of the physical entity is based on the characteristic scores of any one or combination of the components of said physical entity.

In embodiments, the characteristic score of the physical entity source is based on the numerical vectors of at least part of the physical entities comprised in the physical entity source. The numerical vectors of at least part of the physical entities may be used to calculate the numerical vector of the physical entity source, which is then used to determine the characteristic score of the physical entity source. In embodiments, the characteristic score of the physical entity source is based on the characteristic scores of at least part of the physical entities comprised in the physical entity source.

The term "intrinsic quality" relates to the inherent characteristics of a physical element. The intrinsic quality (IQ). The intrinsic quality is calculated based on any one or combination of the metrics: the formal linguisticity quality (LQ), the prolificity (P), and the intrinsic semantic quality (IQ_SQ) of the respective physical entities. The term "extrinsic quality" relates to factors outside of the content of a physical entity that influence its overall quality and usability. Extrinsic quality is calculated based on any one or combination of the metrics: the perceived content quality (CQ), extrinsic semantic quality (EQ_SQ), the search relevance (SR) and the network analysis (NA). Prolificity P relates to the quality resulting from publication frequency. Formal linguisticity LQ relates to the quality resulting from format, format structure, usage, complexity of language, grammatical errors and readability of text. Intrinsic semantic quality IQ_SQ relates to the quality resulting from coherence and semantic triple information density. Content quality CQ relates to the emotional or personal impact to the ideas or information expressed in the text. Extrinsic semantic quality EQ_SQ relates to correctness, usefulness, understandability, consistency and appropriateness of the meaning and context of language, which also relates to emotional or personal impact (sentiment) to the language and communication of the text, i.e., how effectively the text communicates its intended message to the reader. The EQ_SQ and the CQ may be combined into a single term, i.e., EQ_SQ. Search relevance SR relates to any metric returned by the search engine technology to quantify the similarity between the query request and the query result. Network analysis NA relates to virality (i.e., the tendency of spreading very quickly), centrality (i.e., the importance of a node, e.g., a physical entity within a physical entity source), novelty (e.g., the degree to which a physical entity has links to other physical entitles of the same type), similarity (i.e., degree of resemblance or correlation between nodes, e.g., physical entities), etc. Thus, the numerical vector of any of the physical entity data (i.e., relating to any component of the physical entity), the physical entity and the physical entity source may include vector elements which relate to values of any of the intrinsic and extrinsic quality metrics, e.g., the vector [LQ; P; IQ_SQ; CQ; EQ_SQ; SR; NA]. Thus, the characteristic score of any of the physical entity data, the physical entity and the physical entity source may relate to a combination of scores of the intrinsic and extrinsic qualities, e.g., the vector of scores [IQ; EQ], which may include a combination of the intrinsic and extrinsic qualities, or the characteristic score may relate to an overall value of the any of the physical entity data, the physical entity and the physical entity source.

In embodiments, the numerical vector and/or characteristic score of any of the physical entity data and/or the physical entity comprises at least formal linguisticity and/or prolificity.

Formal linguisticity is calculated as the weighted sum of a set of formal linguisticity scores, with each score based on one or more metrics calculated during the formal linguistics step, wherein the set of formal linguisticity scores comprises one or combination of the following scores: the voluminosity; the informativity and information content; the verbosity; the lexical diversity; and the readability; the named entity density score; the semantic triple density score; the open class part of speech (OC-PoS) density score. The information content of a physical entity is a measure that quantifies its content relevance or informativeness, and is calculated as the sum of the Inverse Document Frequency of each stemmed phrase or word occurring in physical entity data. The informativity of physical entity data is a numerical value calculated based on a statistic, e.g., a percentile of the information content of all composing sentences. The information content of a phrase set is calculated as the average information content of each phrase in the phrase set. The voluminosity is a measure for the size of a publishing or published component of a physical entity. The prominence of physical entity data is defined as the ratio of the publication frequency in two document entity data and of which one is considered more highlighting than the other (for example a title can be considered as more highlighting than a body). The reading complexity is calculated based on the Flesch-Kincaid Readibility Index. The verbosity of physical entity data is calculated based on a statistic, e.g., the median (i.e., 50th percentile) of the number of alphanumeric tokens of all composing sentences. The named entity density score of physical entity data is calculated based on the named entity density, e.g., the average number of named entities per valid sentence. The OC-PoS density score of physical entity data is calculated based on the OC-PoS density which relates to the frequency and diversity of words belonging to the open class parts of speech within a given text, e.g., the average number of OC-PoS per valid sentence. The Semantic Triple density score of physical entity data is based on the semantic triple density, e.g., the average number of semantic triples per valid sentence. The lexical diversity of physical entity data is calculated based on the lexical diversity index which is calculated based on the number of unique OC-PoS and the total number of OC-PoS using the Mass formula.

Prolificity is calculated based on the rate, recency and emergence of a physical entity. The Rate measures a physical entity's recent publication rate. It is calculated as a weighted average of publication rates calculated for a set of lookback time windows. The Recency is a measure for the time that passed since the last publication by a publishing physical entity or of a published physical entity. The emergence of a physical entity is determined based on an analysis of its publication frequency time series in a time range.

In embodiments, any of the physical entities is in the form of a URL that relates to a website, wherein the physical entity data are extracted from said website. In embodiments, the physical entity is an electronic document, e.g., a pdf comprising text and images, whereby numerical vectors may be determined by performing calculations on the text and images, from which the characteristic scores may be determined. In embodiments, the physical entity is a media stream/feed, e.g., a live video stream/feed comprising images or video or a live audio stream/feed comprising audio. In embodiments, the physical entity is a media broadcast comprising at least one of audio, image, video and text, whereby numerical vectors may be determined by performing calculations on the media, from which the characteristic scores may be determined. In embodiments, the physical entity data is a collection of media files whereby different numerical vectors of the media files may be indicative of whether, and to what extent, the collection is characterized by the relevant characteristic. In each of these example embodiments, the invention may advantageously allow to detect which of the physical entity data may be characteristic with relevance, and thus, allow to detect which of the physical entities may be of the relevant characteristic.

In this document, the term "URL" refers to a uniform resource locator, relating to web addresses of websites. Thereby, subsequent parts (i-v) of the URL structure are referred to as (i) scheme, such as "https" or http", (ii) subdomain (optional), (iii) second-level domain or SLD, (iv) top-level domain or TLD, such as ".com" or ".org", and (v) subdirectory (optional).

In this document, "extraction" and "extracting" is an umbrella term referring to any way of obtaining physical entity data. Furthermore, extracting may also encompass "converting", relating to a form or phase of extracting that may involve modifications to the physical entity data. In embodiments relating to obtaining, the physical entity is processed to extract the physical entity data therefrom, such as a document is processed to extract its title and body and contents of the body, such as text strings and images. In embodiments relating to converting, an image is processed to arrive at a text string being an alt text automatically generated from the image by means of an alt text generator.

In embodiments, the physical entity data comprises a media file, preferably an image, wherein the physical entity data is associated with a numerical vector determined based on a text string obtained by processing said media file with a media-to-text operation, preferably by processing said image with automated alt text generation.

In this document, a "media-to-text operation" is an umbrella term for any type of automated processing that derives, from at least a portion of media data, a text string that relates to the contents of the media data. Examples of media-to-text operations are alt text generation, OCR, speech-to-text, automated subtitling, and any type of automated annotation of a portion of media data relating to audio, video, or any related visual or auditory representation. Thereby, "alt text generation" may relate to extracting physical data from, e.g., a URL or a website, or to processing of physical data after they are extracted, e.g., as part of the determining of numerical vectors of physical entity data and/or determining of the characteristic score. In embodiments, this may relate to a portion of media data comprising an image or belonging to an image, e.g., a bitmap or any other pixel map comprising an array of pixels. In embodiments, this may relate to a portion of media data comprising video data or belonging to a video, e.g., a sequence of bitmaps or any other pixel maps each comprising an array of pixels. Thereby, alt text generation may automatically generate one or more keywords relating to the scene depicted by the pixels. This may relate to, e.g.: any words or sentences describing the color or contrast of the image; any object or person detected in the scene; the physical appearance of the person; the number of persons or objects detected in the scene; the event (SpaceX launches 10 satellites), the activity (e.g., rocket launch) that may be suggested by the object (e.g., a rocket in midair) or the appearance of the person or the relation between an object and a person (e.g., Elon Musk watching the rocket launch).

In embodiments, the numerical vectors are determined by processing the respective physical entities and calculating the numerical vectors based on the respective physical entity data within the respective physical entities. In preferred embodiments, the respective physical entity data concern respective media file, preferably an image, wherein said processing comprises, for each media file, alt text generation, for obtaining respective text strings, wherein the calculating of the respective numerical vectors is based on said respective text strings.

In this document, the term "query request" refers to a query input, such as from a user. The query request may be any one or combination of: a search query input, an audio input, a natural language text (from which semantic information may be extracted), query string as a request, and an image file. In embodiments, the query request comprises a technical feature. In particular embodiments, the query request consists of the technical feature. The technical feature may relate to a particular resolution of media, such as an image or audio, and/or a particular quality of the media.

In embodiments, the method comprises determining of similarity scores of physical entities w.r.t. the query request, particularly the technical feature. The determining of similarity scores may be performed by means of a textual search engine, such as Elasticsearch which is a search and analytics engine for textual data and which can be used in conjunction with an external image processing library and/or tool (e.g., OpenNLP or spaCy) to extract features and/or perform image recognition and and/or store relevant metatdata in Elasticsearch. Other search engines, such as Apache Solr, Algolia, Amazon CloudSearch, etc., will be apparent to a person skilled in the art of querying. Thereby, in embodiments, the search engine may be used in conjunction with an image processing library and/or tool to extract features and/or perform image recognition and and/or store relevant metatdata in the search engine. In particular embodiments, the determining of similarity scores may be performed by means of an image search engine, such as TensorFlow Hub. Other search engines, such as OpenCV, Annoy, Facebook AI Similarity Search (FAISS), etc., will be apparent to a person skilled in the art of querying.

In embodiments, the physical entities are labelled based on extracted contextual information of the respective physical entities, said contextual information relating to at least one of a detected type, a detected quality, a detected geography, and a detected topic of the respective physical entities. The contextual information of a physical entity may be detected based on the physical entity data. For example, a document comprising images of a particular sport, such as a football game, wherein physical objects, such as football players are included, are used to detect that the type of the physical entity corresponds to a news article and the topic of the physical entity corresponds to sports, and, thus, the physical entity is labelled as a sports news article. In preferred embodiments, the respective physical entity sources are labelled based on the respective labelled physical entities comprised therein. For example, physical entities comprised in a particular physical entity source all relate to news articles, such as sports news articles, world news articles, political news articles, etc., and thus, the physical entity source corresponds to a news outlet and is therefore labelled as a news outlet.

In embodiments, the physical entity is labeled by detecting a similarity between the contextual information of the physical entity and each of the contextual information of physical entities in a physical entity space (i.e., a predefined set of physical entities, such as all recorded and/or analyzed physical entities in a database).

In embodiments, the similarity is detected by calculating a distance between said physical entity and each of the contextual information of physical entities, wherein the respective contextual information of the physical entities with the smallest distance to said physical entity is detected as the contextual information of said physical entity, and preferably used to label said physical entity. In embodiments, the similarity is detected by calculating a distance between a vectorized physical entity and a vector space of physical entities, wherein the respective contextual information related to a vector of a physical entity in the physical entity vector space with the smallest distance to said vectorized physical entity is determined as the contextual information of said vectorized physical entity, and preferably used to label said physical entity. In embodiments, the contextual information of the physical entities are in the form of a vector, whereby the similarity between the contextual information of the physical entity and each of the contextual information of physical entities in the physical entity space is detected by calculating the distance between the vector of the contextual information of the physical entity and the vector of each of the contextual information of physical entities in the physical entity space or in the physical entity vector space. The distance may be calculated by means of a distance metric, such as cosine similarity, Hamming distance, Euclidean distance, Manhattan distance, etc. The distance may be calculated between the numerical vector of the physical entity data within said physical entity and the numerical vectors of the respective contextual information of physical entities. In embodiments, the type of physical entity source is detected by detecting a similarity between the physical entity source and each of the contextual information of physical entity sources.

In embodiments, the physical entities and/or physical entity data are embedded in the physical entity vector space, wherein vectorized physical entities are compared with one or more vectorized physical entity data. For example, labelling a physical entity is performed by comparing the vector of the physical entity (e.g., a contextual information vector extracted therefrom) with a vectorized word, such as the word "news", and thus, by detecting the number of time the word "news" is mentioned in the vector of the physical entity or the contextual information, the physical entity is labelled as a news article.

In embodiments, the physical entity sources are labelled based on detected contextual information of the respective physical entity sources, said contextual information relating to at least one of a detected type, a detected quality, a detected geography, and a detected topic of the respective physical entity sources. In embodiments, the contextual information of a physical entity source is detected based on the contextual information of the physical entities comprised in the physical entity source. In embodiments, a physical entity source is labelled based on the labelled physical entities comprised in the physical entity source.

In embodiments, the respective contextual information of a physical entity and/or of a physical entity source are detected/extracting from the physical entity (or the physical entity data therein) and/or the physical entity source, respectively. Meta analysis may be performed on the extracted contextual information to determine and/or assign a respective label to the physical entity and/or the physical entity source.

In embodiments, the labelling of the physical entities is performed based on the characteristic score of the respective physical entity and/or the numerical vector of the respective physical entity. Preferably, the characteristic score and/or the numerical vector may be used in addition to the detected contextual information of the respective physical entity.

In embodiments, labelling of the physical entity sources is performed based on the characteristic score of the respective physical entity source and/or the numerical vector of the respective physical entity source. Preferably, the characteristic score and/or the numerical vector may be used in addition to the detected contextual information of the respective physical entity source.

In embodiments, the query result further comprises a first physical entity source and a second physical entity source from among the physical entity sources, wherein the first physical entity source is selected over the second physical entity source based on the respective predetermined characteristic scores of the first and second physical entity sources, preferably, wherein the query result further comprises the respective predetermined characteristic scores of the first and second physical entity sources. Thereby, in embodiments, the first physical entity source is ranked over the second physical entity source. Thereby, in embodiments, the relative ranking of physical entity sources, e.g., according to descending characteristic scores, may be a further advantage in that the most "relevant" example may appear first. Thus, the method ensures not only that the query result comprises "relevant" physical entities and physical entity sources, but also physical entities and physical entity sources which score highly on particularly relevant characteristic(s), such as quality of text and/or quality of an image and/or quality of a video and/or quality of audio.

In embodiments, the method further comprises the step of generating a graphical representation of the query result, wherein the graphical representation displays the similarity scores of the first and second physical entities. The graphical representation may additionally or alternatively display the characteristic scores of the first and second physical entities and/or the respective physical entity source. In preferred embodiments, the graphical representation displays a mark-up, preferably a highlighting and/or a heatmap, wherein the mark-up, preferably color and/or highlighting, is indicative of a weight of the similarity scores and/or the characteristic scores of the first and second physical entities and/or of the respective physical entity source to the selection of the first physical entity over the second physical entity. In example embodiments, this may relate to the displayed characteristic score of the first physical entity may be highlighted in a color with a higher intensity compared to that of the second physical entity. The display of the graphical representation is preferably performed on a graphical user interface (GUI).

In embodiments, the numerical vectors are arrays of equal length with, for each index position, a real value. This may have the advantage that calculation of the numerical vectors for any one or combination of the respective physical entities, the respective physical entity sources and the respective physical entity source sets may be a mere arithmetic calculation, e.g., through calculation of mean values for each of the real values of corresponding index positions of the characteristic physical entity data.

In embodiments, the physical entities and their respective numerical vectors and/or characteristic scores are stored in a database. In embodiments, the respective numerical vectors and/or characteristic scores of the respective physical entity data is also stored in the database. This allows for "re-use" of values and calculations when determining the characteristic scores or calculating the numerical vectors of physical entity sources or physical entity source sets.

### Examples

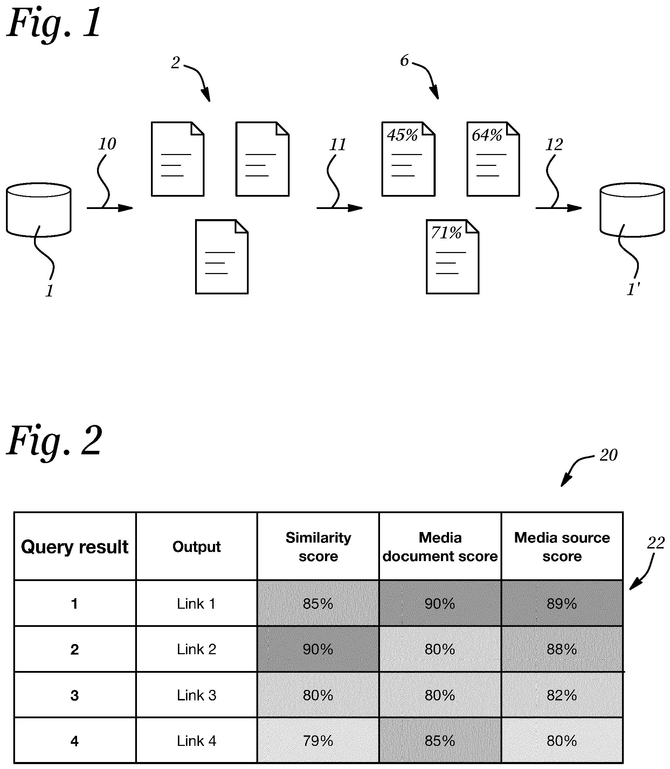

Example embodiments of the invention will be described with reference to Fig. 1 and 2, which are not intended to limit the scope of the invention in any way.

### Example 1: example of detecting a characteristic score of a physical entity source according to the invention

This example is described with reference to Fig. 1. In this example according to embodiments of the invention, a physical entity source 1 is URL which relates to a main domain. In this example, the physical entities within this physical entity source 1 relate to documents each comprising an image.

A plurality of physical entities 2 is sampled 10 from the physical entity source 1 based on a predetermined criterion. In this example, the predetermined criterion relates to a maximum number of physical entities that have been most recently published in the physical entity source. For each of the sampled documents a characteristic score is determined 11 to obtain the scored physical entities 6 with respective characteristic scores, e.g., 45%, 64% and 71% respectively as shown in Fig. 1. The respective characteristic scores are determined based on the respective numerical vectors of the respective physical entities 6 (i.e., the physical entity data in the respective physical entities 6).

As shown in Fig. 1, the physical entities 6 with respective characteristic scores are used to determine 12 a characteristic score of the physical entity source 1 wherein the physical entities 2, 6 are comprised to obtain the scored physical entity source 1'. The physical entity source 1' is scored based on the respective numerical vectors of the respective physical entities 6.

In this example, respective numerical vectors of the respective physical entities 6 are calculated based on the intrinsic quality (IQ) and the extrinsic quality (EQ) of the respective physical entity. The intrinsic quality is calculated based on the formal linguisticity quality (LQ), the prolificity (P), and the semantic quality (IQ_SQ) of the respective physical entities. The extrinsic quality is calculated based on the perceived content quality (CQ), semantic quality (EQ_SQ), the search relevance (SR) and the network analysis (NA).

The numerical vector of the physical entity source 1' may thus include numerical values of the elements of the intrinsic and extrinsic quality of the physical entity source 1', e.g., [LQ; P; IQ_SQ; CQ; EQ_SQ; SR; NA] = [57%; 43%; 79%; 23%; 58%; 62%; 60%].

The characteristic score and/or the numerical vector of the physical entity source 1' may then be used to label the physical entity source 1' with respect to source context, source quality, source geography, etc., which may include a numerical vector of any of the categories. For example, the labelling includes a first numerical vector relating to the source context [67% insurance; 54% energy; 34% manufacturing; ...], a second numerical vector relating to the quality context [60% deceptive content; 73% superior/inferior content; 34% incomplete content; ...], a third numerical vector relating to the source geography [90% USA; 73% Canada; 34% EU; ...], ...

### Example 2: example of a graphical representation according to the invention

This example is described with reference to Fig. 2. In this example according to embodiments of the invention, a graphical representation of the query result is generated. As shown in Fig. 2, the graphical representation relates to a table 20 which displays the similarity scores and the characteristic scores of physical entities and the characteristic scores of the respective physical entity source. In this example, the physical entities all relate to media documents, i.e., each comprise or consist of one or more media files, each of which relates to a link, i.e., a URL. The physical entity sources all relate to media sources, i.e., each comprise or consist of one or more media documents as described herein.

As shown in Fig. 2, a mark-up, particularly a heatmap 22, is also displayed. The heatmap 22 is indicative of a weight of the characteristic scores of the physical entities and the respective physical entity source to the ranking of the physical entities. This ranking is based on the similarity scores of the physical entities and the characteristic scores of the physical entities and the physical entity sources.

It can be seen in Fig. 2, that Link 2, shown in the second row, has the highest similarity score, and that Link 1, shown in the first row, has the highest characteristic score (90%) for the physical entity (90%) and for the physical entity source (89%). The query result shows a selection of Link 1 over Link 2. Therefore, in this example, this section the combination of the characteristic scores of the physical entity and the physical entity source has a higher weight than the similarity score. Thus, the heatmap allows to more easily detect the weight of the characteristic scores and the similarity scores.

### Example 3: example of determining a characteristic score of a physical entity

In this example we consider one of the physical entities of any of Fig. 1 or Fig. 2. In this example according to embodiments of the invention, a physical entity comprises a title, an abstract and a body. For instance, the physical entity source relates to the main domain "spacenews.com" and the physical entity within this physical entity source relates to the URL "https://spacenews.com/spacex-launches-10-satellites-for-u-s-space-development-agency". The physical entity data of said physical entity include a title "SpaceX launches 10 satellites for U.S. Space Development Agency", an abstract "The mission to low Earth orbit is the first launch of a new military communications and missile tracking constellation", an image and a body.

The title comprises elements being a phrase, at least one semantic triple and words. The abstract comprises elements being at least one sentence, at least one phrase, at least one semantic triple and words. From the image, a text string is derived which comprises elements being at least one sentence, at least one phrase, at least one semantic triple and words. The body comprises elements being sentences, phrases, semantic triples and words. The respective numerical vector of the respective of the title, the abstract, the image and the body is calculated based on a numerical vector of any one or combination of the elements comprised in the respective of the title, the abstract, the image and the body. The numerical vector of the physical entity data is calculated based on the numerical vectors of any one or combination the title, the abstract, the image and the body.

In this example, the respective numerical vector of the respective of the physical entity and the physical entity data (i.e., relating to the title, the abstract, the image and the body) relates to the intrinsic quality and the extrinsic quality, wherein each of the numerical vectors relates to the following vector [LQ; P; IQ_SQ; CQ; EQ_SQ; SR; NA], as described above. The characteristic score of the physical entity, which relates to the intrinsic quality and the extrinsic quality, is based on the numerical vector of any one of combination of the physical entity and any of the physical entity data. The characteristic score of any of the physical entity data may be determined based on the respective numerical vector of the respective physical entity data.

In an alternative example, the respective characteristic score of the physical entity data is calculated based on the characteristic score of any one or combination of the title, the abstract, the image and the body. The characteristic score of the physical entity is thus determined based on the characteristic score of any one or combination of the physical entity data.

### (End of Example 3)

Although the present invention has been described above with reference to certain embodiments thereof, it will be evident that various modifications and changes may be made to these embodiments without departing from the broader scope of the present invention, as defined by the appended claims.

## Claims

1. A computer-implemented method for detecting physical entities, the method comprising the steps of:
- receiving a query request comprising a technical feature;
- determining respective similarity scores of a plurality of physical entities with respect to the query request;
- returning a query result comprising a first physical entity and a second physical entity from among the plurality of physical entities, wherein the first physical entity is selected over the second physical entity based on the respective similarity scores of the first and second physical entities, preferably further comprising the respective similarity scores of the first and second physical entities,
wherein the first physical entity is selected over the second physical entity based further on respective predetermined characteristic scores of the first and second physical entities,
wherein the characteristic scores of the respective physical entities are determined based on predetermined numerical vectors of physical entity data within the respective physical entities,
preferably, wherein the query result further comprises the respective predetermined characteristic scores of the first and second physical entities.

2. The method according to claim 1, wherein any of the physical entities is in the form of a URL that relates to a website, wherein the physical entity data are extracted from said website.

3. The method according to claim 1 or claim 2, wherein the physical entity data comprises a media file, preferably an image, wherein the physical entity data is associated with a numerical vector determined based on a text string obtained by processing said media file with a media-to-text operation, preferably by processing said image with automated alt text generation.

4. The method according to any one of claims 1-3, wherein the first physical entity is selected over the second physical entity based further on respective characteristic scores of respective physical entity sources in which the respective of the first and second physical entities is comprised.

5. The method according to claim 4, wherein the respective characteristic scores of the physical entity sources are determined based on the respective predetermined characteristic scores of the physical entities within the respective physical entity sources.

6. The method according to claim 4 or claim 5, wherein the physical entities are labelled based on contextual information extracted from the respective physical entities by detecting a similarity between said contextual information and contextual information in a physical entity space,
preferably, wherein the respective physical entity sources are labelled based on the respective labelled physical entities comprised therein.

7. The method according to any one of claims 4-6, wherein the query result further comprises a first physical entity source and a second physical entity source from among the physical entity sources,
wherein the first physical entity source is selected over the second physical entity source based on the respective predetermined characteristic scores of the first and second physical entity sources,
preferably, wherein the query result further comprises the respective predetermined characteristic scores of the first and second physical entity sources.

8. The method according to any one of claims 1-7, wherein the numerical vectors are determined by processing the respective physical entities; and calculating the numerical vectors based on the respective physical entity data within the respective physical entities,
preferably, wherein the respective physical entity data concern respective images, wherein said processing comprises, for each image, alt text generation, for obtaining respective text strings; and wherein the calculating of the respective numerical vectors is based on said respective text strings.

9. The method according to any one of claims 1-8, wherein the query request consists of the technical feature.

10. The method according to any one of claims 1-9, wherein the technical feature relates to a particular resolution.

11. The method according to any one of claim 1-10, further comprising the step of:
generating a graphical representation of the query result, wherein the graphical representation displays the characteristic scores of the first and second physical entities and/or the respective physical entity source and a mark-up, preferably a heatmap, wherein the mark-up is indicative of a weight of the characteristic scores of the first and second physical entities and/or the respective physical entity source to the selection of the first physical entity over the second physical entity;
preferably, displaying the graphical representation on a graphical user interface.

12. A data processing device comprising means for carrying out the method of any one of claims 1-11.

13. A system comprising:
a data processing device according to claim 12;
a database connected to the data processing device; and
a user device comprising a display and being connected to the data processing device;
wherein the data processing device is configured to perform the steps of:
- receiving, from the user device, the query request,
- detecting, from the database, the physical entities based on the query request,
- sending, to the user device, the query result,
wherein the user device is configured to:
- sending, to the data processing device, the query request,
- receiving, from the data processing device, the query result,
- displaying the query result on the display.

14. A computer program comprising instructions which, when the program is executed by a computer, cause the computer to carry out the method of any one of claims 1-11.

15. A computer-readable medium comprising instructions which, when executed by a computer, cause the computer to carry out the method of any one of claims 1-11.
